# EUROPEAN PATENT SPECIFICATION

(11) **EP 1 234 381 B1**
(45) Date of publication and mention of the grant of the patent: **05.04.2006**
(21) Application number: 01988980.7
(22) Date of filing: 11.10.2001
(51) Int. Cl.: H04B 1/38, H01Q 9/04

(54) **Transceiver for time division system**
Antennenumschaltung für Zeitmultiplex- Sende-Empfänger
Emetteur-récepteur pour système à répartition dans le temps

(30) Priority: 20.10.2000 GB 0025709
(43) Date of publication of application: 28.08.2002
(73) Proprietor: Koninklijke Philips Electronics, N.V., 5621 BA Eindhoven (NL)
(72) Inventor: MARSHALL, Paul, R., NL-5656 AA Eindhoven (NL); BOYLE, Kevin, R., NL-5656 AA Eindhoven (NL); MARSHALL, Christopher, B., NL-5656 AA Eindhoven (NL)
(74) Representative: Scott, Kevin James
(86) International application number: PCT/EP2001/011782
(87) International publication number: WO 2002/035722

(56) References cited:
- EP-A- 0 625 831
- EP-A- 0 993 070
- PATENT ABSTRACTS OF JAPAN vol. 1999, no. 12, 29 October 1999 (1999-10-29) & JP 11 205184 A (DENSO CORP), 30 July 1999 (1999-07-30)

## Description

### Technical Field

The present invention relates to a transceiver for use in a time division system, and to such a transceiver implemented as an integrated circuit.

### Background Art

A radio transceiver comprises an output from a transmitter power amplifier, an input to a receiver and an antenna. When the transceiver is receiving energy is directed from the antenna to the receiver input, while when transmitting energy is directed from the transmitter output to the antenna. In a Time Division Multiple Access (TDMA) system, the function of ensuring that energy is routed correctly is often implemented using switches (such as PIN diodes).

Some known TDMA transceivers use suitable choices of impedances, instead of switches, to direct the energy appropriately. For example, when transmitting the impedance looking into the receiver input can be made to produce a reflection thereby ensuring that all of the power from the transmitter output is radiated. Similarly, when receiving the impedance of the transmitter output can be made to produce a reflection, so that the received energy from the antenna flows into the receiver input.

It is well-known that a circuit having a high impedance (i.e. effectively open circuit) will produce a reflection, and such a choice is used for a number of low power radio transceivers. However, this choice does give rise to large voltage swings, which in turn can generate spurious signals via non-linear effects. One of such circuits is disclosed by document EP625831.

An alternative approach is to choose circuit elements which produce a low impedance state (i.e. effectively short circuit). However, in such a circuit a transmission line circuit or equivalent is required in order to map the low impedance to a high impedance at the point of connection of the two signal paths. This results in extra circuit complexity.

### Disclosure of Invention

An object of the present invention is to provide an improved switching function for a TDMA transceiver.

According to a first aspect of the present invention there is provided a transceiver for use in a time division system, the transceiver comprising transmitter means, receiver means, first connection means for coupling the transmitter means to a first port of an antenna and second connection means for coupling the receiver to a second port of the antenna, wherein first low impedance means are provided for coupling at least one port of the antenna to a radio frequency ground when the transceiver is operating as a transmitter and second low impedance means are provided for coupling at least one port of the antenna to a radio frequency ground when the transceiver is operating as a receiver.

The first and second impedance means may be provided by low impedance switches, each coupling one port of the antenna to a radio frequency ground. Such an arrangement has the advantage of avoiding the need to have switches in the signal path and of being straightforward to implement on chip if the transceiver is implemented as an integrated circuit. By selection of a suitable antenna, such as a folded monopole, which requires one end to be grounded in operation, isolation between transmitter means and receiver means is automatically achieved.

According to a second aspect of the present invention there is provided a transceiver made in accordance with the first aspect of the invention, implemented as an integrated circuit.

### Brief Description of Drawings

Embodiments of the present invention will now be described, by way of example, with reference to the accompanying drawings, wherein:
Figure 1 is a diagram of a first embodiment of the present invention in transmit mode;
Figure 2 is a diagram of a first embodiment of the present invention in receive mode;
Figure 3 is a diagram of a second embodiment of the present invention in transmit mode;

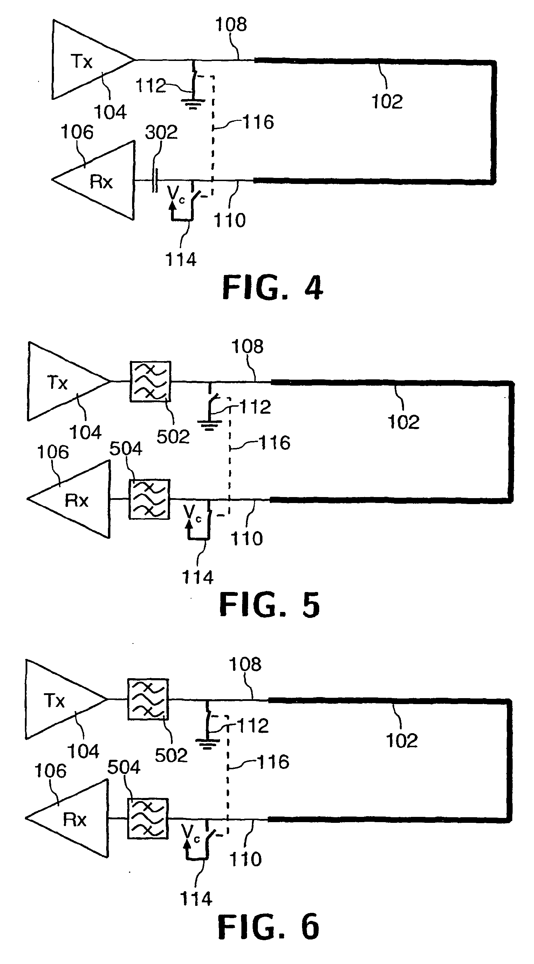

Figure 4 is a diagram of a second embodiment of the present invention in receive mode;
Figure 5 is a diagram of a third embodiment of the present invention in transmit mode;
Figure 6 is a diagram of a third embodiment of the present invention in receive mode; and
Figure 7 is a diagram of a differential version of the second embodiment of the present invention in transmit mode.

In the drawings the same reference numerals have been used to indicate corresponding features.

### Modes for Carrying Out the Invention

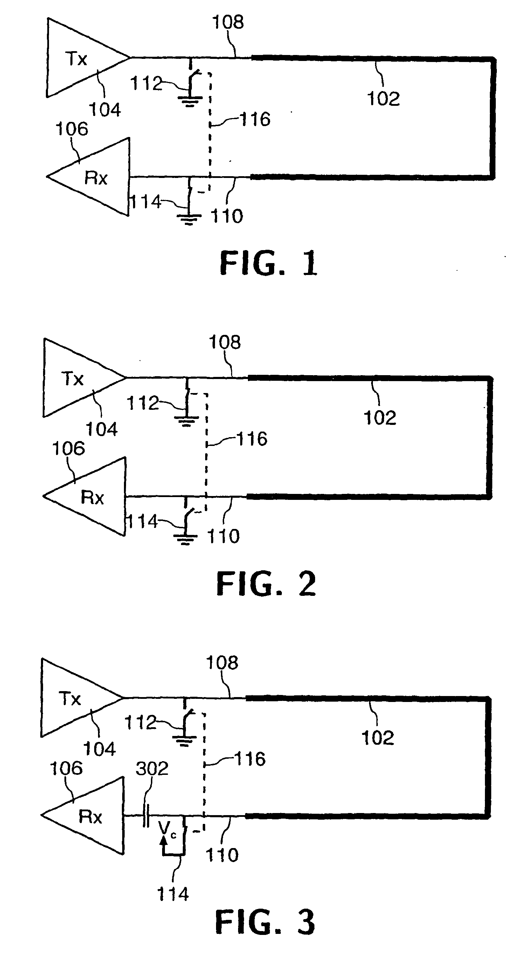

Referring to Figure 1, a first embodiment of the present invention comprises a folded monopole antenna 102 and a transceiver comprising a transmitter 104 and a receiver 106. In operation, such an antenna 102 has a signal for transmission fed into one end of the antenna while the other end is grounded. Signals from the transmitter 104 are fed via a first line 108 into one end of the antenna 102, while the signals from the other end of the antenna 102 are fed to the receiver 106 via a second line 110. First and second switches 112,114 are provided which, when closed, connect a respective one of the first and second lines 108,110 to ground. A link 116 between the switches ensures that when the first switch 112 is open the second switch 114 is closed and vice versa. As illustrated, the second switch 114 is closed, thereby grounding the second line 110 and thereby the input of the receiver 106, which therefore receives no signals. The transmitter 104 is connected to the non-grounded side of the antenna 102 which therefore transmits signals as required.

Figure 2 shows the same embodiment but in receive mode. The first switch 112 is closed, thereby grounding the first line 108 and hence the output of the transmitter 104. The second switch 114 is open, thereby enabling signals received by the antenna 102 to be routed via the second line 110 to the input of the receiver 106.

When used in conjunction with an integrated transceiver, an arrangement in accordance with the present invention enables a reduction in the number of external (off-chip) components required. As well as a reduction in component count, the arrangement also reduces energy losses and improves signal integrity by avoiding the need for any switches in the signal flow path.

A useful modification of the first embodiment is to use the antenna 102 to provide a DC path for the output of a power amplifier included in the transmitter 104, thereby avoiding the need to provide a separate DC path for the standing current through the power amplifier output stage. A second embodiment of the present invention incorporating this modification is illustrated in Figures 3 (transmit mode) and 4 (receive mode). In transmit mode the second line 110 is connected via the second switch 114 to a DC supply V_{c}, which supply also acts as an earth for Radio Frequency (RF) signals. A capacitor 302 is provided to enable proper setting of DC voltage levels in the receiver 106.

In all of the above configurations, filtering and matching circuitry can be inserted as necessary. Figures 5 (transmit mode) and 6 (receive mode) illustrate a third embodiment of the present invention in which a transmit filter 502 is coupled between the transmitter 104 and the first line 108. and a receive filter 504 is coupled between the second line 110 and the receiver 106. The possibility of having different filter circuits in the transmit and receive signal paths is particularly useful in a frequency duplex system, in which transmitted and received signals are in different frequency bands. Because filtering provided by the filters 502,504 only needs to be adapted for one band, either transmit or receive, design of each filter is simplified and improved performance is possible. In addition the matching to the antenna 102 can be different and separately optimised for transmit and receive functions, rather than needing a broadband match.

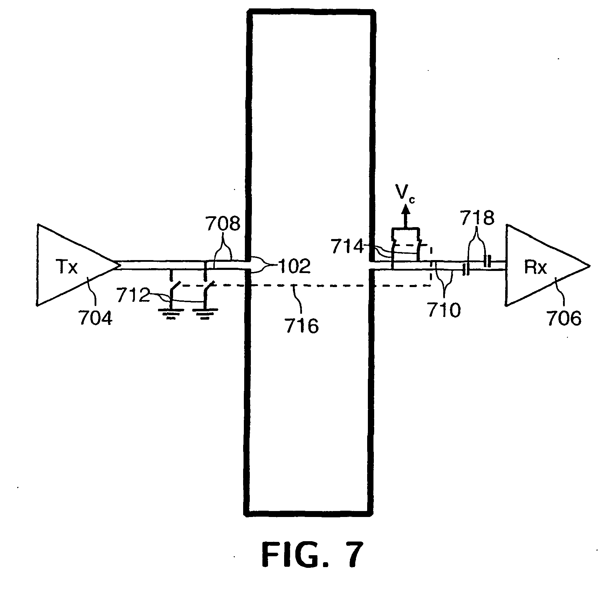

The present invention can also be applied to a differential circuit. Figure 7 shows a differential version of the second embodiment in transmit mode. Twin folded monopole antennas 102 are fed in differential mode from a differential transmitter 704 via first lines 708, and feed a differential receiver 706 via second lines 710. First switches 712 connect the first lines 708 to ground when closed, and second switches 714 connect the second lines 710 to the DC supply V_{c}. A link 716 between the switches 712,714 ensures that one of the pairs of switches is open when the other is closed. Capacitors 718 enable proper setting of DC voltage levels in the receiver 706.

Although the present invention has been described with reference to the use of a folded monopole antenna 102, it is equally applicable to any other antenna where connections to the transmitter 104 and receiver 106 are made to different points on the antenna structure. Changes to impedances between transmit and receive modes affect both steering of signals to/from the antenna 102 and the operation of the antenna 102 itself. In general, the antenna 102 may have more than two ports and impedance changes may be made at ports of the antenna 102 other than those through which energy is required to flow.

In particular, the present invention may be used with Planar Inverted-F Antennas in which different modes of operation are possible. Examples of suitable antennas are disclosed in our co-pending, unpublished United Kingdom patent application 0105440.2 (Applicant's reference PHGB010034).

From reading the present disclosure, other modifications will be apparent to persons skilled in the art. Such modifications may involve other features which are already known in the design, manufacture and use of transceivers, and which may be used instead of or in addition to features already described herein. Although claims have been formulated in this application to particular combinations of features, it should be understood that the scope of the disclosure of the present application also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention. The applicants hereby give notice that new claims may be formulated to such features and/or combinations of features during the prosecution of the present application or of any further application derived therefrom.

In the present specification and claims the word "a" or "an" preceding an element does not exclude the presence of a plurality of such elements. Further, the word "comprising" does not exclude the presence of other elements or steps than those listed.

## Claims

1. A transceiver for use in a time division system, the transceiver comprising transmitter means (104) receiver means, first connection means (108) for coupling the transmitter means (104) to a first port of an antenna (102) and second connection means (110) for coupling the receiver to a second port of the antenna (102) comprising first low impedance means (114) for coupling at least one port of the antenna to a radio frequency ground when the transceiver is operating as a transmitter and second low impedance means (112) for coupling the other port of the antenna to a radio frequency ground when the transceiver is operating as a receiver.

2. A transceiver as claimed in claim 1, wherein the first low impedance means (114) comprises first switch means for coupling the second port of the antenna to a radio frequency ground when the transceiver is operating as a transmitter and wherein the second low impedance means (112) comprises second switch means for coupling the first port of the antenna to a radio frequency ground when the transceiver is operating as a receiver.

3. A transceiver as claimed in claim 1 or 2, wherein the radio frequency ground coupled to the second port of the antenna by the first switch means further comprises a DC voltage source (Vc) for supplying power to the transmitter.

4. A transceiver as claimed in claim 3, wherein capacitance means (302) are coupled between the second connection means (110) and the receiving means (106) for setting suitable DC conditions for the receiving means.

5. A transceiver as claimed in any one of claims 1 to 4, wherein at least one of the first and second connection means includes filtering means (502,504).

6. A transceiver as claimed in any one of claims 1 to 4, wherein at least one of the first and second connection means includes matching means (502,504) for matching the transmitting and/or receiving means (106) to the antenna.

7. A transceiver as claimed in any one of claims 1 to 6, constructed as a differential circuit.

8. A transceiver as claimed in any one of claims 1 to 7, further comprising the antenna (102).

9. A transceiver as claimed in any one of claims 1 to 7, implemented as an integrated circuit.

## Revendications

1. Emetteur-récepteur à utiliser dans un système à répartition dans le temps, l'émetteur-récepteur comprenant des moyens d'émission (104), des moyens de réception, des premiers moyens de connexion (108) destinés à relier les moyens d'émission (104) à un premier point d'accès d'une antenne (102), et des seconds moyens de connexion (110) destinés à relier le récepteur à un second point d'accès de l'antenne (102), comprenant des premiers moyens de faible impédance (114) pour relier au moins un point d'accès de l'antenne à une masse de radiofréquence quand l'émetteur-récepteur fonctionne comme émetteur, et des seconds moyens de faible impédance (112) pour relier l'autre point d'accès de l'antenne à une masse de radiofréquence quand l'émetteur-récepteur fonctionne comme récepteur.

2. Emetteur-récepteur suivant la revendication 1, dans lequel les premiers moyens de faible impédance (114) comprennent des premiers moyens de commutation pour relier le second point d'accès de l'antenne à une masse de radiofréquence quand l'émetteur-récepteur fonctionne comme émetteur, et dans lequel les seconds moyens de faible impédance (112) comprennent des seconds moyens de commutation pour relier le premier point d'accès de l'antenne à une masse de radiofréquence quand l'émetteur-récepteur fonctionne comme récepteur.

3. Emetteur-récepteur suivant la revendication 1 ou 2, dans lequel la masse de radiofréquence reliée au second point d'accès de l'antenne par les premiers moyens de commutation comprend en outre une source de tension continue (V_{c}) destinée à alimenter l'émetteur.

4. Emetteur-récepteur suivant la revendication 3, dans lequel des moyens de capacité (302) sont reliés entre les seconds moyens de connexion (110) et les moyens de réception (106) pour fixer les conditions de courant continu appropriées pour les moyens de réception.

5. Emetteur-récepteur suivant l'une quelconque des revendications 1 à 4, dans lequel au moins un des premiers et seconds moyens de connexion comprend des moyens de filtrage (502, 504).

6. Emetteur-récepteur suivant l'une quelconque des revendications 1 à 4, dans lequel au moins un des premiers et seconds moyens de connexion comprend des moyens d'adaptation (502, 504) destinés à adapter les moyens d'émission et/ou de réception (106) à l'antenne.

7. Emetteur-récepteur suivant l'une quelconque des revendications 1 à 6, construit sous la forme d'un circuit différentiel.

8. Emetteur-récepteur suivant l'une quelconque des revendications 1 à 7, comprenant en outre l'antenne (102).

9. Emetteur-récepteur suivant l'une quelconque des revendications 1 à 7, mis en oeuvre sous la forme d'un circuit intégré.

## Patentansprüche

1. Sende-Empfänger zum Einsatz in einem Zeitmultiplexsystem, wobei der Sende-Empfänger Folgendes umfasst: Sendemittel (104), Empfangsmittel, erste Verbindungsmittel (108) zum Verbinden der Sendemittel (104) mit einem ersten Port einer Antenne (102) und zweite Verbindungsmittel (110) zum Verbinden des Empfängers mit einem zweiten Port der Antenne (102), erste Mitteln mit niedriger Impedanz (114) umfassend, um mindestens einen Port der Antenne mit einer HF-Masse zu verbinden, wenn der Sende-Empfänger als Sender funktioniert, und zweite Mittel mit niedriger Impedanz (112) umfassend, um den anderen Port der Antenne mit einer HF-Masse zu verbinden, wenn der Sende-Empfänger als Empfänger funktioniert.

2. Sende-Empfänger nach Anspruch 1, wobei die ersten Mittel mit niedriger Impedanz (114) erste Schaltmittel umfassen, um den zweiten Port der Antenne mit einer HF-Masse zu verbinden, wenn der Sende-Empfänger als Sender funktioniert, und wobei die zweiten Mittel mit niedriger Impedanz (112) zweite Schaltmittel umfassen, um den ersten Port der Antenne mit einer HF-Masse zu verbinden, wenn der Sende-Empfänger als Empfänger funktioniert.

3. Sende-Empfänger nach Anspruch 1 oder 2, wobei die mit dem zweiten Port der Antenne durch die ersten Schaltmittel verbundene HF-Masse ferner eine Gleichspannungsquelle (V_{c}) umfasst, um den Sender mit Leistung zu versorgen.

4. Sende-Empfänger nach Anspruch 3, wobei Kapazitätsmittel (302) zwischen die zweiten Verbindungsmittel (110) und die Empfangsmittel (106) geschaltet sind, um geeignete Gleichspannungsbedingungen für die Empfangsmittel einzustellen.

5. Sende-Empfänger nach einem der Ansprüche 1 bis 4, wobei mindestens eines der ersten und zweiten Verbindungsmittel Filtermittel (502, 504) umfasst.

6. Sende-Empfänger nach einem der Ansprüche 1 bis 4, wobei mindestens eines der ersten und zweiten Verbindungsmittel Anpassungsmittel (502, 504) zum Anpassen der Sende- und/oder Empfangsmittel (106) an die Antenne umfasst.

7. Sende-Empfänger nach einem der Ansprüche 1 bis 6, der als eine Differentialschaltung konstruiert ist.

8. Sende-Empfänger nach einem der Ansprüche 1 bis 7, weiterhin die Antenne (102) umfassend.

9. Sende-Empfänger nach einem der Ansprüche 1 bis 7, der als integrierte Schaltung ausgeführt ist.
